# EUROPÄISCHE PATENTSCHRIFT

(11) **EP 1 218 858 B1**
(45) Veröffentlichungstag und Bekanntmachung des Hinweises auf die Patenterteilung: **02.07.2003**
(21) Anmeldenummer: 00925073.9
(22) Anmeldetag: 08.04.2000
(51) Int. Cl.: G07F 7/10

(54) **VERFAHREN ZUM KUNDENINDIVIDUELLEN ANPASSEN EINES AUTORADIOS**
METHOD FOR CUSTOMISING A CAR RADIO TO INDIVIDUAL REQUIREMENTS
PROCEDE POUR PERSONNALISER UN AUTORADIO

(30) Priorität: 21.05.1999 DE 19933192
(43) Veröffentlichungstag der Anmeldung: 03.07.2002
(73) Patentinhaber: ROBERT BOSCH GMBH, 70442 Stuttgart (DE)
(72) Erfinder: DE VRIES, Claus, D-31234 Edemissen (DE)
(86) Internationale Anmeldenummer: DE0001088
(87) Internationale Veröffentlichungsnummer: WO00072276

(56) Entgegenhaltungen:
- EP-A- 0 530 601
- EP-A- 0 640 899
- WO-A-91/12698
- WO-A-98/09257
- WO-A-98/52160
- DE-A- 4 445 847
- DE-A- 19 632 197
- US-A- 5 036 461
- US-A- 5 166 886

## Beschreibung

### Technisches Gebiet

Die Erfindung betrifft ein Verfahren zum kundenindividuellen Anpassen eines Autoradios mit einer Mikroprozessorsteuerung und einer entsprechenden geräteintemen Betriebssoftware, wobei eine Schnittstelle zum Verändern der Betriebssoftware sowie eine von der Schnittstelle auslesbare, geräteexteme Speichereinrichtung vorgesehen ist, gemäß dem Oberbegriff des Anspruchs 1.

### Stand der Technik

Aus der DE-A-196 32 197 ist ein Verfahren zur Programmierung von elektrischen Geräten bekannt, das es auf einfache Art und Weise ermöglicht, über Chipkarten eine geräteinteme Software zu verändern. Die dafür vorgesehene Chipkarte besitzen dazu eine Speichereinheit. Das Gerät selbst besitzt für diese Programmierung über Chipkarte eine Laderoutine, die in einem Speicher des Gerätes hinterlegt ist.

Die EP 0 640 899 A zeigt ein Verfahren zur Programmierung eines Speichermittels für ein elektronische Gerät, dessen Funktionalität vom Inhalt des Speichermittels abhängig ist, mit folgenden Schritten: Einen ersten Schritt, in welchem mit Hilfe einer Einrichtung, die aus einem Computer mit einem Prozess und einer Software-Library besteht, ein Programmteil generiert wird, welcher die gewünschte Funktionalität des Zielgerätes bewirkt. Einem zweiten Schritt, in welchem das Speichermittel mit dem Programmteil programmiert wird, indem der Programmteil selbsttätig im Speichermittel abgespeichert wird. Dieses Speichermittel (z.B. EPROM) ist nun ein Teil der Ziel-Speicheranordnung und kann somit in das elektronische Zielgerät eingebaut werden.

### Darstellung der Erfindung, Aufgabe, Lösung, Vorteile

Es ist Aufgabe der vorliegenden Erfindung, ein Autoradio der obengenannten Art dahingehend zu verbessern, daß dessen Funktionsumfang auf einfache Weise nach entsprechenden Kundenwünschen variierbar ist.

Diese Aufgabe wird durch ein Autoradio der o.g. Art mit den in Anspruch 1 gekennzeichneten Merkmalen gelöst.

Dazu ist es erfindungsgemäß vorgesehen, dass aus verschiedenen Softwaremodulen für unterschiedliche Funktionen des Autoradios ausgewählt wird, diese Auswahl auf der Speichereinrichtung abgespeichert wird, zum Inbetriebsetzen des Autoradios die Speichereinrichtung mit der Schnittstelle verbunden wird und die auf der Speichereinrichtung abgespeicherten Softwaremodule als Erweiterung der Betriebssoftware in das Autoradio geladen werden.

Dies hat den Vorteil, dass der Funktionsumfang des Autoradios einfach durch hinzufügen von entsprechenden Softwarekomponenten variabel ist, so daß ein Endverbraucher zunächst ein kostengünstiges Grundgerät mit ausschließlich den von ihm gewünschten Funktionen erwerben und erst später nach und nach mit entsprechend zeitlich verteiltem finanziellen Aufwand die Funktionsvielfalt seines Grundgerätes erweitern kann. Bei der Erstanschaffung des Grundgerätes muß daher der Endverbraucher nicht für Funktionen bezahlen, die er nicht wünscht bzw. nicht benötigt Mit einem einzigen Grundgerät können viele individuelle Kundenwünsche durch einfaches Zusammenstellen der Softwaremodule befriedigt werden, wobei dem Endverbraucher gleichzeitig die Option einer späteren Funktionserweiterung offen bleibt. Ferner bleibt der Endverbraucher an technischen Weiterentwicklungen dadurch beteiligt, daß die ggf. verbesserten Softwarekomponenten seines vorhandenen Funktionsumfanges lediglich erneuert werden müssen. Femer kann der Endverbraucher vollkommen neu programmierte Funktionen nachträglich ergänzen.

Vorzugsweise Weitergestaltungen der Vorrichtung sind in den Ansprüchen 2 bis 5 beschrieben.

Damit der Endverbraucher seine Auswahl überprüfen und feststellen kann, ob sie seinen Bedürfnissen entspricht, wird nach der Auswahl der verschiedenen Softwaremodule für unterschiedliche Funktionen des Autoradios eine Simulation des Funktionsumfangs des Autoradios durchgeführt.

Zweckmäßigerweise wird als externe Speichereinrichtung eine PCMCIA-Karte verwendet. Es ist jedoch auch jedes andere externe Speichermedium mit entsprechender Schnittstelle am Autoradio verwendbar, wie beispielsweise Chipkarte, Geldkarte, Schlüsselkarte, Personal Computer (PC), Notebook oder ähnliches.

Zum Ansprechen eines großen Kundenkreises und zum Erleichtern der Auswahl des Funktionsumfanges wird die Auswahl der verschiedenen Softwaremodule für unterschiedliche Funktionen des Autoradios und/oder die Simulation des ausgewählten Softwarepaketes bzw. der einzelnen Softwaremodule im Internet, einem Extranet, einem Intranet, einem anderen Computernetzwerk oder mittels Datenträger zur Verfügung gestellt.

### Bester Weg zur Ausführung der Erfindung

Bei dem erfindungsgemäßen Verfahren wird zunächst ein Autoradio mit einer entsprechenden Hardware für alle geplanten Funktionen in der Art eines Grundgerätes zur Verfügung gestellt. Eine entsprechende Mikroprozessorsteuerung beinhaltet eine Grundsoftware sowie Softwaremodule für verschiedene Funktionen des Autoradios, welche von der Grundsoftware über eine Karte, wie beispielsweise Chipkarte oder eine Schlüsselkarte, geladen werden kann. Der Endverbraucher kauft das Grundgerät, welches zunächst noch nicht mit Softwaremodulen ausgestattet ist, im Handel und wählt aus einer Anzahl von verfügbaren Softwaremodulen diejenigen aus, deren Funktion bzw. Funktionsmerkmal er bei seinem Grundgerät nutzen möchte. Diese Funktionen werden beispielsweise über einen Monitor ausgewählt und können in einer Simulation auch sofort getestet werden, bis der Endverbraucher davon überzeugt ist, daß die von ihm getroffenen Auswahl seinen Wünschen und Bedürfnissen entspricht.

Nach Beendigung der Auswahl werden die ausgewählten Softwaremodule auf ein externes Speichermedium, wie beispielsweise eine Karte, kopiert und ein Verkaufspreis, je nach Art und Umfang der gewählten Softwaremodule, berechnet. Mit diesem externen Speichermedium nimmt der Endverbraucher sein Grundgerät in Betrieb, indem er das Speichermedium mit einer Schnittstelle des Grundgerätes verbindet und die Softwaremodule in das Grundgerät geladen werden. Daraufhin stehen dem Endverbraucher die diesen Softwaremodulen zugeordneten Funktionen zur Verfügung.

Zur Realisation eines Kopierschutzes sind die Softwaremodule zweckmäßigerweise auf des Grundgerät des Endverbrauchers individualisiert bzw. gerätebezogen erstellt, d.h. die Softwaremodule erkennen beispielsweise anhand der Seriennummer des Grundgerätes, ob sie auch für dieses Grundgerät gekauft worden sind. Auf anderen Grundgeräten lassen sie sich entweder nicht laden oder nicht aktivieren.

Der Endverbraucher kann später, beispielsweise per Download über Internet, Extranet, Intranet, andere Computemetze oder am Monitor seines Händlers, weitere Funktionen in Form weiterer Softwaremodute testen und ggf. hinzu kaufen.

In der Praxis kauft der Endverbraucher bei einem Händler das Autoradio als Grundgerät und kann dort für das von ihm gewählte Gerät an einem Terminal gewünschte Funktionen in Form von Softwaremodulen auswählen. Ggf. hat er dies auch bereits vorher online per Internet getan. Am Terminal bzw. am Internet wird der Betrieb der verschiedenen Funktionen simuliert, so daß noch eine zusätzliche Entscheidungshilfe zur Verfügung steht. Es ist zu beachten, daß der Kunde Funktionen wählt, hinter denen entsprechende Softwaremodule stehen. Nach Beendigung der Auswahl erhält der Endverbraucher eine auf ihn zugeschnittene externe Speichereinrichtung, auf welcher die hinter den gewählten Funktionen stehenden Softwaremodule abgespeichert und ggf. gerätespezifisch erstellt sind. Dieses individuelle Paket von Softwaremodulen ergibt nach dem Laden in das Grundgerät einen gewünschten Bedienungs- und Funktionsumfang. Später kann der Endverbraucher im Internet oder bei einem Händler weitere Funktionen simulieren und auswählen. Bei einer Kaufentscheidung wird dann auf seine externe Speichereinrichtung das zusätzliche Softwaremodul übertragen. Sobald der Endverbraucher dann diese ergänzte Speichereinrichtung in sein Grundgerät einsteckt, wird das zusätzliche Softwaremodul in des Grundgerät geladen und die entsprechende Funktion steht nun zur Verfügung. Zusätzlich können bereits vom Endverbraucher gekaufte Softwaremodule auf der Speichereinrichtung aktualisiert werden, so daß der Endverbraucher auch ohne zukaufen einer neuen Funktion an der technischen Weiterentwicklung seines Gerätes teilnimmt. Die Aktualisierung bereits gekaufter Softwaremodule erfolgt ggf. kostenpflichtig.

Für die Absicherung der geschäftlichen Abwicklung sind beispielsweise bekannte Mittel des Zahlungsverkehrs und die individuelle Verschlüsselung der Software vorgesehen.

Das Einspeichern der Betriebssoftware sowie der Zusatzmodule in das Autoradio erfolgt beispielsweise mittels einer PCMCIA-Karte oder einem anderen externen Speichermedium bzw. über eine geeignete Schnittstelle am Autoradio. Ferner erfolgt eine derartige "Betankung" des Autoradios mit der Betriebssoftware sowie der Zusatzmodule und/oder die Simulation der Softwaremodule beim Kauf des Autoradios alternativ über Netzwerke, wie Internet, Extranet, Intranet, andere Computernetze oder über Datenträger.

## Patentansprüche

1. Verfahren zum kundenindividuellen Anpassen eines Autoradios mit einer Mikroprozessorsteuerung und einer entsprechenden geräteinternen Betriebssoftware, wobei eine Schnittstelle zum Verändern der Betriebssoftware sowie eine von der Schnittstelle auslesbare, geräteexterne Speichereinrichtung vorgesehen ist, wobei
aus verschiedenen Softwaremodulen für unterschiedliche Funktionen des Autoradios ausgewählt wird, diese Auswahl auf der Speichereinrichtung abgespeichert wird, und zum Inbetriebsetzen des Autoradios die Speichereinrichtung mit der Schnittstelle verbunden wird, **dadurch gekennzeichnet, dass** die auf der Speichereinrichtung abgespeicherten Softwaremodule als Erweiterung der Betriebssoftware in das Autoradio geladen werden.

2. Verfahren nach Anspruch 1,
**dadurch gekennzeichnet, dass**
nach der Auswahl der verschiedenen Softwaremodule für unterschiedliche Funktionen des Autoradios eine Simulation des Funktionsumfangs des Autoradios oder eines einzigen Softwaremoduis durchgeführt wird.

3. Verfahren nach Anspruch 2,
**dadurch gekennzeichnet, dass**
die Simulation des Funktionsumfangs des Autoradios im Internet, einem Extranet, einem Intranet, einem anderen Computernetzwerk oder mittels Datenträger zur Verfügung gestellt wird.

4. Verfahren nach einem der vorhergehenden Ansprüche,
**dadurch gekennzeichnet, dass**
als externe Speichereinrichtung eine PCMCIA-Karte, Chipkarte, Geldkarte, Schlüsselkarte, ein Personal Computer (PC) oder Notebook verwendet wird.

5. Verfahren nach einem der vorhergehenden Ansprüche,
**dadurch gekennzeichnet, dass**
die Auswahl der verschiedenen Softwaremodule für unterschiedliche Funktionen des Autoradios im Internet zur Verfügung gestellt wird.

## Claims

1. Method for customer-specific adjustment of a car radio using a microprocessor controller and appropriate operating software inside the unit, where an interface for altering the operating software and also a memory device, outside the unit, which can be read by the interface are provided, where a selection is made from various software modules for different functions of the car radio, this selection is stored on the memory device, and the car radio is put into operation by connecting the memory device to the interface, **characterized in that** the software modules stored on the memory device are loaded into the car radio as an extension to the operating software.

2. Method according to Claim 1,
**characterized in that**
selection of the various software modules for different functions of the car radio is followed by a simulation of the scope of the functions of the car radio or of a single software module.

3. Method according to Claim 2,
**characterized in that**
the simulation of the scope of functions of the car radio is made available on the Internet, on an Extranet, on an Intranet, on another computer network or by means of data storage media.

4. Method according to one of the preceding claims,
**characterized in that**
the external memory device used is a PCMCIA card, a chip card, a cash card, a key card, a personal computer (PC) or a Notebook.

5. Method according to one of the preceding claims,
**characterized in that**
the selection of the various software modules for different functions of the car radio is made available on the Internet.

## Revendications

1. Procédé pour adapter un autoradio individuellement à un client avec une commande par microprocesseur et un programme de fonctionnement interne à l'appareil, avec une interface pour modifier le programme de fonctionnement ainsi qu'une mémoire externe à l'appareil et qui peut être lue à travers l'interface, selon lequel on sélectionne parmi différents modules de programmes pour différentes fonctions de l'autoradio, cette sélection étant enregistrée dans la mémoire et pour mettre en marche l'autoradio on relie la mémoire à l'interface,
**caractérisé en ce que**
les modules de mémoire enregistrés dans la mémoire sont chargés dans l'autoradio comme extensions des programmes de fonctionnement.

2. Procédé selon la revendication 1,
**caractérisé en ce qu'**
après la sélection parmi les différents modules de programmes pour différentes fonctions de l'autoradio, on effectue une simulation des fonctions de l'autoradio ou d'un unique module de programme.

3. Procédé selon la revendication 2,
**caractérisé en ce que**
la simulation des fonctions de l'autoradio est fournie dans l'Internet, dans un Extranet, dans un Intranet, ou dans un autre réseau d'ordinateur ou par l'intermédiaire de supports de données.

4. Procédé selon l'une des revendications précédentes,
**caractérisé en ce que**
la mémoire externe est une carte PCMCIA, une carte à puce, une carte monétaire, une carte d'accès, un ordinateur personnel (PC) ou un agenda.

5. Procédé selon l'une des revendications précédentes,
**caractérisé en ce que**
la sélection des différents modules de programmes pour les différentes fonctions de l'autoradio est fournie dans l'Internet.
